# EUROPEAN PATENT APPLICATION

(11) **EP 4 783 443 A1**
(43) Date of publication of application: **29.07.2026**
(21) Application number: 24869701.3
(22) Date of filing: 28.04.2024
(51) Int. Cl.: H02M 3/04, H02M 1/32

(54) **DIRECT-CURRENT TRANSFORMER FOR DIRECT-CURRENT GRID INTERCONNECTION AND CONTROL AND PROTECTION METHOD THEREFOR**

(30) Priority: 27.09.2023 CN 202311264395
(71) Applicant: State Grid Smart Grid Research Institute Co., Ltd., Beijing 102209 (CN)
(72) Inventor: GAO, Chong, Beijing 102209 (CN); LIN, Zhiguang, Beijing 102209 (CN); WU, Yilin, Beijing 102209 (CN); DENG, Weihua, Beijing 102209 (CN); HE, Zhiyuan, Beijing 102209 (CN); TANG, Guangfu, Beijing 102209 (CN)
(74) Representative: Cabinet Camus Lebkiri
(86) International application number: PCT/CN2024/090398
(87) International publication number: WO 2025/066133

(57) **Abstract**

The present invention relates to the technical field of flexible direct-current transmission. Disclosed are a direct-current transformer for direct-current grid interconnection and a control and protection method therefor. The direct-current transformer comprises a positive pole converter, a negative pole converter, and a controller. The positive pole converter and the negative pole converter each comprise a plurality of phase units. Each of the phase units comprises a common bridge arm and a plurality of port bridge arms, wherein a first end of each port bridge arm and a first end of the common bridge arm are connected to a common point, and a second end of each port bridge arm is connected to a second end of the port bridge arm of another phase unit at the same position before an output port is led out; and a direct-current voltage is input into or output from the output port and a second end of the common bridge arm. The present invention uses only the plurality of phase units to form a monopole converter, without the need for including an alternating-current isolation transformer. In addition, fewer power semiconductors are used, resulting in lower manufacturing costs.

## Description

### CROSS-REFERENCE TO RELATED APPLICATION

The present disclosure claims priority to Chinese Patent Application No. 202311264395.1, filed on September 27, 2023 and entitled "DIRECT CURRENT TRANSFORMER FOR DIRECT CURRENT GRID INTERCONNECTION AND CONTROL AND PROTECTION METHOD THEREFOR", which is incorporated herein by reference in its entirety.

### TECHNICAL FIELD

The present disclosure relates to the field of flexible direct-current (DC) transmission technologies, and in particular, to a DC transformer for DC grid interconnection and a control and protection method therefor.

### BACKGROUND

Compared with traditional AC transmission, DC transmission technology has advantages such as longer transmission distance and larger transmission capacity. Flexible DC transmission technology, with voltage source converters as its core equipment, has the advantages of being flexible and controllable and adaptable to weak power grids, and plays an important role in renewable energy grid connection and transmission scenarios.

The flexible DC transmission has evolved from point-to-point transmission systems to multi-terminal DC grids at a single voltage level. To achieve wide-area interconnection and mutual support between DC grids, leverage the advantages of DC grids at different voltage levels, and adapt to the high proportion of diverse new energy sources, multi-voltage-level DC grids are the future development trend. Therefore, a converter device capable of interconnecting DC grids at a plurality of voltage levels is needed.

In prior arts, multi-winding AC isolation transformers are commonly used to realize multi-port DC conversion. However, this structure requires an excessive number of components, and the isolation capacity of the isolation transformer used needs to be higher than the system voltage level. This results in such DC transformers having problems such as high cost, severe component loss and heat generation, large size, and difficulty in being applied to high-voltage systems. Therefore, existing DC transformers are only used in low-voltage distribution networks. Therefore, there is an urgent need for a DC transformer that can be used in high-voltage DC grid interconnection scenarios.

### SUMMARY

In view of this, the present disclosure provides a DC transformer for DC grid interconnection and a control and protection method therefor, to solve the problem that multi-winding AC isolation transformers require an excessive number of components, resulting in high converter costs, and severe device losses and heat generation.

In a first aspect, the present disclosure provides a DC transformer for DC grid interconnection, and the DC transformer for DC grid interconnection includes a positive converter, a negative converter, and a controller. The positive converter and the negative converter each include a plurality of phase units, each phase unit includes a common bridge arm and a plurality of port bridge arms. A first end of each port bridge arm is connected to a first end of the common bridge arm at a common point. A second end of each port bridge arm is connected to a second end of a port bridge arm at a same position in other phase units, and an output port is led out. Second ends of each common bridge arms are interconnected and grounded. Each output port is connected to a DC grid. The controller is connected to each port bridge arm and each common bridge arm, and the controller is configured to control an operating status of each port bridge arm and each common bridge arm.

The present disclosure uses only a plurality of phase units to form a single-pole converter, without an AC isolation transformer, and uses a small number of power semiconductors. It has a low construction cost.

In an optional implementation, the common bridge arm and the port bridge arm each include: a plurality of cascaded half-bridge submodules and/or full-bridge submodules.

In an optional implementation, the common bridge arm and the port bridge arm further include: a bridge arm reactor. The bridge arm reactor of the port bridge arms and the bridge arm reactor of the common bridge arm are configured according to actual needs; some port bridge arms and common bridge arms may not be configured with the bridge arm reactor.

In an optional implementation, an output voltage DC component value of the port bridge arm at a same position of different phase units and an output voltage DC component value of the common bridge arm are same, AC component amplitudes are same and phases are symmetrical; and an output voltage of the output port is a sum of an output voltage of a corresponding port bridge arm and an output voltage of the common bridge arm.

In an optional implementation, the controller includes: a basic controller, a system operation controller, and a system protection controller. The basic controller, connected to each submodule, is configured to calculate an average capacitor voltage of each bridge arm submodule and send the average capacitor voltage to the system operation controller and the system protection controller; receive a bridge arm voltage control command issued by the system operation controller, process and obtain an output status of each submodule, and issue the output status to each submodule; receive a protection locking command issued by the system protection controller and control a corresponding bridge arm submodule to complete a locking action; the system operation controller is connected to the basic controller; and the system protection controller is connected to the basic controller.

In a second aspect, the present disclosure provides a control and protection method of a DC transformer for DC grid interconnection, based on the DC transformer for DC grid interconnection in the first aspect. The method includes: controlling a voltage or current of each port, an overall energy balance of the DC transformer for DC grid interconnection, and energy balance between bridge arms, by controlling an operating status of a port bridge arm; and performing a real-time detection of a voltage of each port and an average capacitor voltage of the bridge arm submodule, and performing a corresponding protection mechanism in response to a real-time detection value is abnormal.

In an optional implementation, a process of controlling the voltage or current of each port, the overall energy balance of the DC transformer for DC grid interconnection, and the energy balance between bridge arms, by controlling the operating status of the port bridge arm, includes: dividing the port bridge arms into a controllable port bridge arm and a balanced port bridge arm, based on characteristics of the DC power grid connected to each port bridge arm; giving a DC component control value of the common bridge arm; detecting an AC voltage at the common point and subtracting the AC voltage at the common point from a corresponding reference value to obtain a first error value; and obtaining an AC component control value of the common bridge arm, by calculating the first error value through the system operation controller; detecting a port voltage or current and subtracting the port voltage or current from a corresponding reference value to obtain a second error value; and obtaining a DC component control value of the controllable port bridge arm, by calculating the second error value through the system operation controller; detecting capacitor voltages of all bridge arm submodules, obtaining the overall energy value of the DC transformer through calculating, and subtracting the overall energy value from a corresponding reference value to obtain a third error value; and obtaining a DC component control value of the balanced port bridge arm, by calculating the third error value through the system operation controller; detecting the capacitor voltages of all bridge arm submodules, obtaining the energy value of each port bridge arm through calculating, and subtracting the energy value of each port bridge arm from the overall energy value of the DC transformer to obtain a fourth error value; and obtaining an AC component control value of each port bridge arm, by calculating the fourth error value through the system operation controller; and adding the DC component control value and the AC component control value of each bridge arm to obtain a voltage control value of each bridge arm, and sending the voltage control value of each bridge arm to the basic controller; and controlling, by the basic controller, a switching of the bridge arm submodules for output, based on the voltage control value of each bridge arm.

In an optional implementation, a process of performing a port overvoltage protection mechanism, includes: detecting a voltage at each port; and locking a port bridge arm connected to a port, in response to the voltage of the port exceeds a first preset protection threshold.

In an optional implementation, a process of performing an overvoltage protection mechanism of a port submodule, includes: detecting an average capacitor voltage of each bridge arm submodule; and locking a bridge arm, in response to the average capacitor voltage of the bridge arm submodule exceeds a second preset protection threshold.

In an optional implementation, a process of performing a polarity asymmetric protection mechanism, includes: dividing the port bridge arms into a controllable port bridge arm and a balanced port bridge arm, based on parameters of the DC power grid connected to each port bridge arm; calculating a difference between a positive voltage and a negative voltage at each port, by detecting a voltage at each port; and locking all bridge arms, in response to the difference between the positive voltage and the negative voltage corresponding to a balanced bridge arm exceeds a third preset protection threshold; and locking a controllable port bridge arm, in response to the difference between the positive voltage and the negative voltage corresponding to the controllable bridge arm exceeds a fourth protection threshold.

### BRIEF DESCRIPTION OF THE DRAWINGS

FIG. 1 is a topology diagram of a DC transformer for DC grid interconnection, in accordance with an embodiment of the present disclosure;
FIG. 2 is a topology diagram of a positive converter or a negative converter, in accordance with an embodiment of the present disclosure;
FIG. 3 is a topology diagram of a positive converter and a negative converter, in accordance with an embodiment of the present disclosure;
FIGS. 4(a) and 4(b) are topology diagrams of a half-bridge submodule and a full-bridge submodule, in accordance with embodiments of the present disclosure, respectively;
FIG. 5 is a flowchart illustrating a control and protection method of a DC transformer for DC grid interconnection, in accordance with an embodiment of the present disclosure;
FIG. 6 is a schematic diagram of a process for controlling energy balance, in accordance with an embodiment of the present disclosure;
FIG. 7 is a schematic flowchart of performing a port overvoltage protection mechanism, in accordance with an embodiment of the present disclosure;
FIG. 8 is a schematic flowchart of performing a port submodule overvoltage protection mechanism, in accordance with an embodiment of the present disclosure;
FIG. 9 is a schematic flowchart of performing a polarity asymmetric protection mechanism, in accordance with an embodiment of the present disclosure; and
FIG. 10 is a structural example diagram of a DC transformer for DC grid interconnection, in accordance with an embodiment of the present disclosure.

### DETAILED DESCRIPTION

In order to make the purpose, technical solutions and advantages of the embodiments of the present disclosure clear, the technical solutions in the embodiments of the present disclosure will be described clearly and completely with reference to the accompanying drawings in the embodiments of the present disclosure. However, the described embodiments are merely some but not all of embodiments of the present disclosure. Based on the embodiments in the present disclosure, all other embodiments obtained by those ordinary skilled in the art without creative efforts shall fall within the protection scope of the present disclosure.

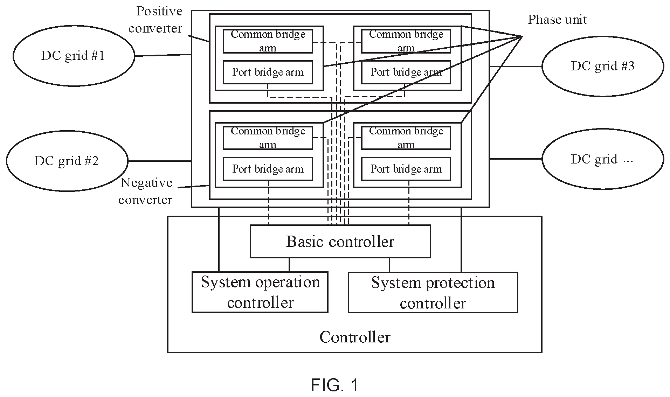

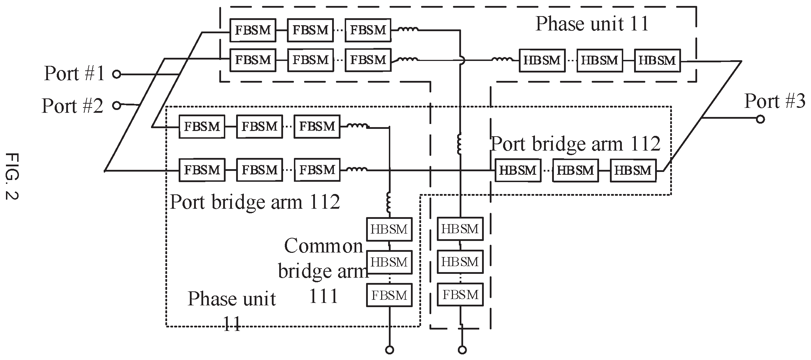

According to an embodiment of the present disclosure, a DC transformer for DC grid interconnection is provided, as shown in FIG. 1, the DC transformer for DC grid interconnection includes a positive converter, a negative converter and a controller. As shown in FIG. 2, the positive converter and the negative converter each include: a plurality of phase units 11, and each phase unit 11 includes: a common bridge arm 111 and a plurality of port bridge arms 112. FIG. 2 considers the positive converter and the negative converter each include two phase units 11, each phase unit 11 includes a common bridge arm 111 and three port bridge arms 112 as an example.

As shown in FIG. 2, a first end of each port bridge arm 112 is connected to a first end of the common bridge arm 111 at a common point. A second end of each port bridge arm 112 is connected to a second end of the port bridge arm 112 at a same position of other phase units 11, an output port is led out.

Specifically, the output port and a second end of the common bridge arm 111 input a DC voltage or output the DC voltage, and an output voltage of the output port is a sum of an output voltage of a corresponding port bridge arm 112 and an output voltage of the common bridge arm 111. As shown in FIG. 2, the DC voltage at the input or output of the three ports may be either positive or negative, which is not limited herein.

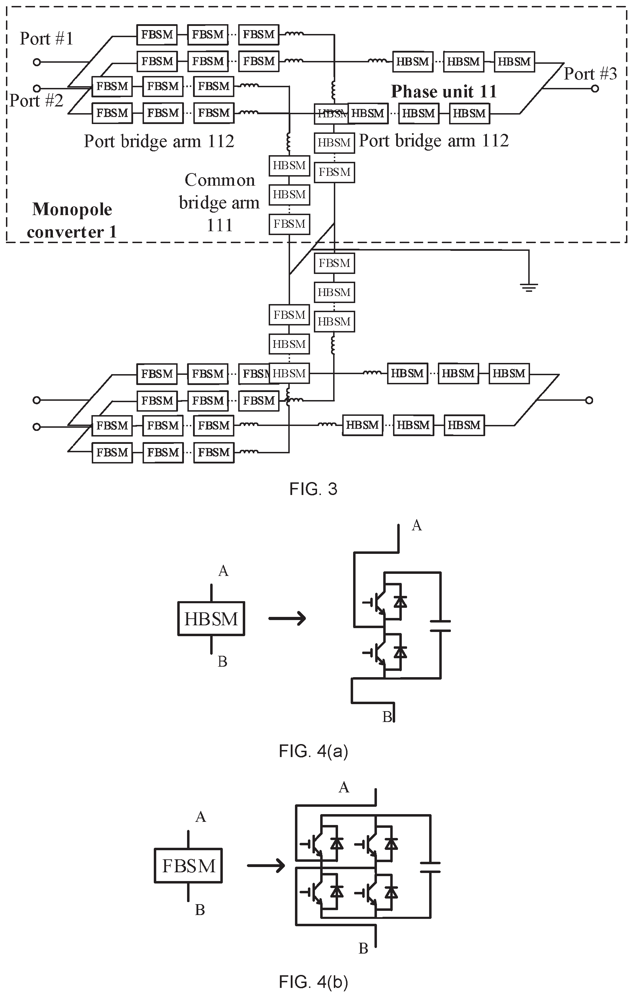

As shown in FIGS. 1 and 3, the second end of each common bridge arm 111 is interconnected and grounded; each output port is connected to a DC power grid. In the present embodiment, each port is connected to a DC power grid, thereby ensuring that a single power grid failure does not affect other power grids.

Specifically, the present embodiment may expand a number of controllable port bridge arms 112, according to system needs, to connect a plurality of DC power grids. FIG. 3 considers a positive converter and a negative converter as an example, with each port connected to a DC power grid. However, the DC transformer for DC grid interconnection may also include a plurality of positive converters and a negative converter, with each positive converter and the negative converter connected to a DC power grid. Alternatively, the DC transformer for DC grid interconnection may include a positive converter and a plurality of negative converters, with each negative converter and the positive converter connected to a DC power grid.

Specifically, the controller is connected to each port bridge arm 112 and each common bridge arm 111, and the controller is configured to control an operating status of each port bridge arm 112 and each common bridge arm 111.

Optionally, the controller in the present embodiment includes: a basic controller, a system operation controller, and a system protection controller. The basic controller is connected to each sub-module via communication lines, the system operation controller is connected to the basic controller via communication lines, and the system protection controller is connected to the basic controller via communication lines.

Specifically, the basic controller receives a bridge arm voltage control command issued by the system operation controller, processes and obtains an output status of each submodule, and issues the command to each submodule. The basic controller receives a protection locking command issued by the system protection controller and controls the submodule of a corresponding bridge arm to complete a locking action. The basic controller calculates an average capacitor voltage of each bridge arm submodule and sends the average capacitor voltage to the system operation controller and the system protection controller.

Specifically, output voltage DC component values of the port bridge arms 112 at the same position of different phase units 11 and the common arm 111 are same (e.g., equal), and AC component amplitudes are equal and phases are symmetrical.

Optionally, the bridge arm reactor of the port bridge arm 112 and the bridge arm reactor of the common bridge arm 111 may be configured according to actual needs, and some port bridge arms 112 and common bridge arms 111 may not be configured with bridge arm reactors.

In some optional implementations, the common bridge arm 111 and the port bridge arm 112 each include a plurality of cascaded half-bridge submodules HBSM and/or full-bridge submodules FBSM, topology structures of the cascaded half-bridge submodules HBSM and the full-bridge submodules FBSM are shown in FIG. 4(a) and FIG. 4(b), respectively.

Optionally, both the common bridge arm 111 and the port bridge arm 112 include a plurality of cascaded sub-modules, the plurality of cascaded sub-modules are half-bridge sub-modules, full-bridge sub-modules, or other types of power semiconductor modules, capable of outputting positive capacitor voltage, zero voltage, or negative capacitor voltage.

Optionally, the present embodiment includes a system measurement component to measure, but is not limited to, the voltage at the common point, a current in each port bridge arm 112 and the common bridge arm 111, and a current and voltage at the output port. The system measurement component is connected to the basic controller, system operation controller, and system protection controller, so as to transmit measurement information.

Specifically, the system operation controller generates bridge arm voltage control commands based on the measured values of port voltage and current. The system protection controller identifies and determines faults, based on the measurement results from the system measurement components, and generates protection locking commands.

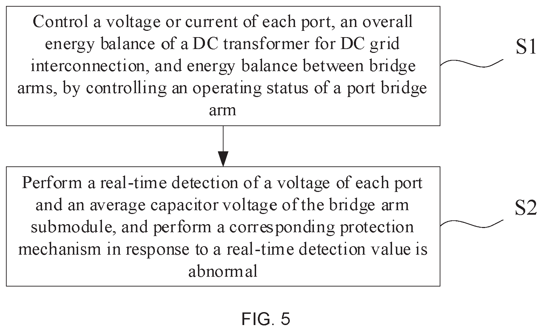

The present embodiment provides a control and protection method of a DC transformer for DC grid interconnection. Based on the DC transformer for DC grid interconnection in the above embodiments, as shown in FIG. 5, the method at least includes steps S1 to S2.

In step S1: a voltage or current of each port, an overall energy balance of a DC transformer for DC grid interconnection, and energy balance between bridge arms is controlled, by controlling an operating status of a port bridge arm.

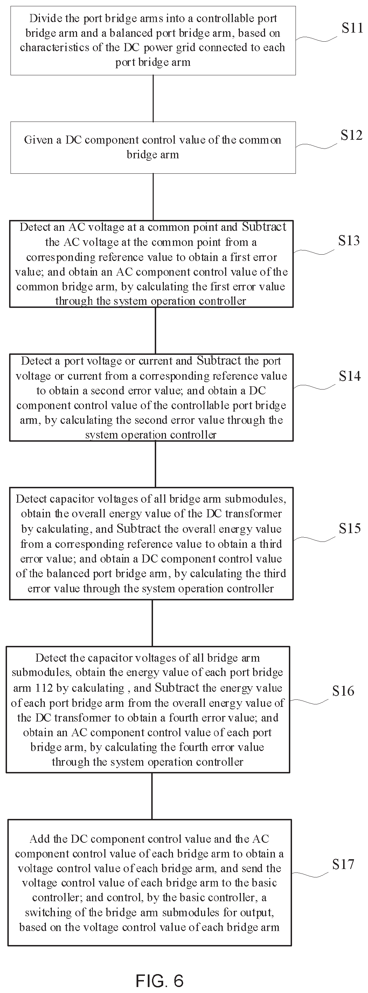

Specifically, as shown in FIG. 6, the step S1 in the present embodiment is performed by steps S11 to S17.

In step S11: the port bridge arms 112 are divided into a controllable port bridge arm and a balanced port bridge arm, based on characteristics of the DC power grid connected to each port bridge arm 112.

In step S12: a DC component control value of the common bridge arm is given.

In step S13: an AC voltage at a common point is detected, and the AC voltage at the common point is subtracted from its corresponding reference value to obtain a first error value; and an AC component control value of the common bridge arm is obtained by calculating the first error value through the system operation controller.

In step S14: a port voltage or current is detected, and the port voltage or current is subtracted from its corresponding reference value to obtain a second error value, and a DC component control value of the controllable port bridge arm is obtained by calculating the second error value through the system operation controller.

In step S15: capacitor voltages of all bridge arm submodules are detected, the overall energy value of the DC transformer is obtained by calculating, and the overall energy value is subtracted from its corresponding reference value to obtain a third error value; and a DC component control value of the balanced port bridge arm is obtained by calculating the third error value through the system operation controller.

In step S16: the capacitor voltages of all bridge arm submodules are detected, the energy value of each port bridge arm 112 is obtained by calculating, and the energy value of each port bridge arm is subtracted the overall energy value of the DC transformer to obtain a fourth error value; and an AC component control value of each port bridge arm is obtained by calculating the fourth error value through the system operation controller.

In step S17: the DC component control value and the AC component control value of each bridge arm are added to obtain a voltage control value of each bridge arm, and the voltage control value of each bridge arm is sent to the basic controller; and a switching of the bridge arm submodules for output is controlled by the basic controller based on the voltage control value of each bridge arm.

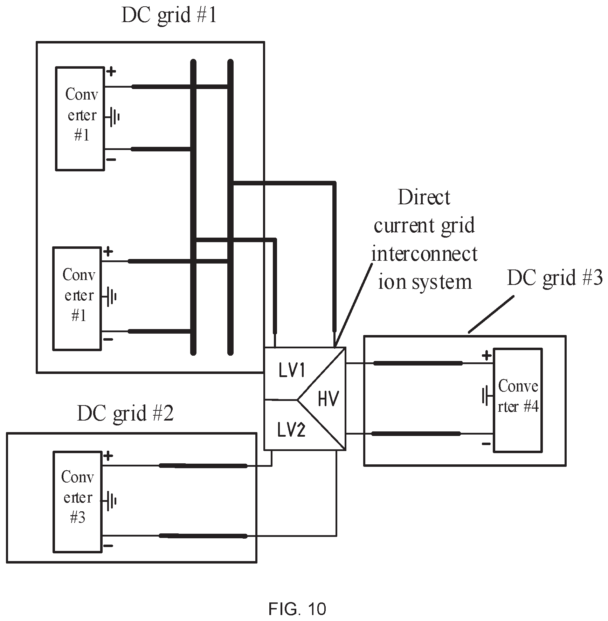

Specifically, considering FIG. 10 as an example, if port #1 is connected to DC grid #1, port #2 is connected to DC grid #2, and port #3 is connected to DC grid #3, DC grid #1 includes converter #1 and converter #2. Converter #1 controls the voltage, and converter #2 controls its own output power. Converter #3 in DC grid #2 controls its own output power, and converter #4 in DC grid #3 controls the voltage. According to the principle that a DC grid has one and only one converter controlling the voltage, a port bridge arm corresponding to port #2 is a controllable port bridge arm, controlling the voltage of port #2. The port bridge arm corresponding to one of the ports, port #1 and port #3, is a balanced port bridge arm, and the port arm corresponding to the other port is a controllable port arm, controlling the port current.

In step S2: a real-time detection of a voltage of each port and an average capacitor voltage of the bridge arm submodule are performed, and a corresponding protection mechanism, in response to a real-time detection value is abnormal, is performed.

Optionally, a hardware configuration method of the protection mechanism in the present embodiment is as follows: the controllable port bridge arm submodule is configured as a full-bridge submodule or a mixture of a full-bridge submodule and a half-bridge submodule connected in series; a reactor is installed at the port; the common connection point between the positive converter and the negative converter is connected to the ground through a small resistor; an inductance value of the bridge arm is increased; and a controllable DC power consumption device is configured at the corresponding port of the controllable port bridge arm.

Specifically, the protection mechanisms in the present embodiment include a port overvoltage protection mechanism, a port submodule overvoltage protection mechanism, and a polarity asymmetric protection mechanism. The execution steps of the three protection mechanisms are as follows.

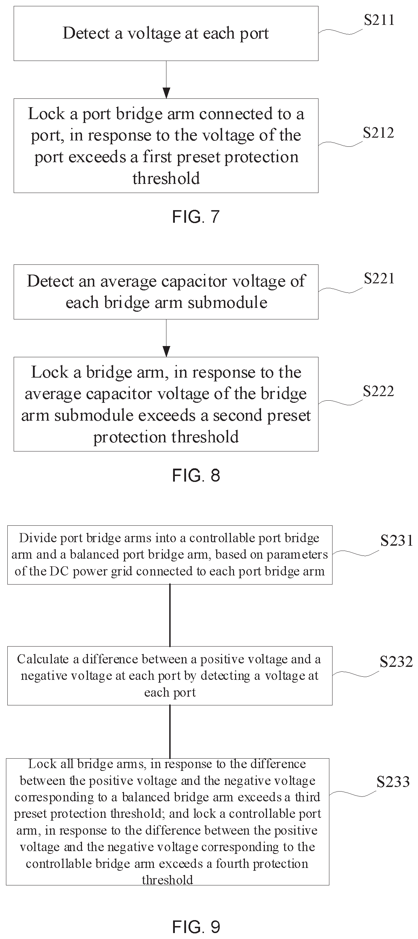

As shown in FIG. 7, a process of performing the port overvoltage protection mechanism at least includes steps S211 to S212.

In step S211: a voltage at each port is detected.

In step S212: a port bridge arm 112 connected to a port is locked, in response to the voltage of the port exceeds a first preset protection threshold.

As shown in FIG. 8, a process of performing the port submodule overvoltage protection mechanism at least includes steps S221 to S222.

In step S221: an average capacitor voltage of each bridge arm submodule is detected.

In step S222: a bridge arm is locked, in response to the average capacitor voltage of the bridge arm submodule exceeds a second preset protection threshold.

As shown in FIG. 9, a process of performing the polarity asymmetric protection mechanism at least includes steps S231 to S233.

In step S231: the port bridge arms 112 are divided into a controllable port bridge arm and a balanced port bridge arm, based on parameters of the DC power grid connected to each port bridge arm 112.

In step S232: a difference between a positive voltage and a negative voltage at each port is calculated by detecting a voltage at each port.

In step S233: all bridge arms are locked, in response to the difference between the positive voltage and the negative voltage corresponding to a balanced bridge arm exceeds a third preset protection threshold; and a controllable port arm 112 is locked, in response to the difference between the positive voltage and the negative voltage corresponding to the controllable bridge arm exceeds a fourth protection threshold.

Although embodiments of the disclosure have been described in conjunction with the accompanying drawings, those skilled in the art can make various modifications and variations without departing from the spirit and scope of the disclosure, and such modifications and variations all fall within the scope defined by the appended claims.

### Industrial applicability

The present disclosure proposes a DC transformer for DC grid interconnection and a control and protection method therefor, which uses only a plurality of phase units to form a single-pole converter without an alternating current (AC) isolation transformer, and uses a small number of power semiconductors. It has a low construction cost, so as to solve the problem of multi-winding AC isolation transformers requiring an excessive number of components, leading to high converter costs and severe component losses and heat generation.

## Claims

1. A direct current (DC) transformer for DC grid interconnection, comprising a positive converter, a negative converter, and a controller, wherein the positive converter and the negative converter each include a plurality of phase units, and each phase unit includes a common bridge arm and a plurality of port bridge arms, wherein,
a first end of each port bridge arm is connected to a first end of the common bridge arm at a common point, and a second end of each port bridge arm is connected to a second end of a port bridge arm at a same position of other phase units, and an output port is led out;
a second end of each common bridge arm is interconnected and grounded;
each output port is connected to a DC power grid; and
the controller is connected to each port bridge arm and each common bridge arm, and is configured to control an operating status of each port bridge arm and each common bridge arm.

2. The DC transformer for DC grid interconnection according to claim 1, wherein the common bridge arm and the port bridge arm each include: a plurality of cascaded half-bridge submodules and/or full-bridge submodules.

3. The DC transformer for DC grid interconnection according to claim 1, wherein the common bridge arm and the port bridge arm further include: a bridge arm reactor;
the bridge arm reactor of the port bridge arms and the bridge arm reactor of the common bridge arm are configured according to actual needs;
some port bridge arms and common bridge arms may not be configured with the bridge arm reactor.

4. The DC transformer for DC grid interconnection according to any one of claims 1 to 3, wherein an output voltage DC component value of the port bridge arm at a same position of different phase units and an output voltage DC component value of the common bridge arm are same, AC component amplitudes are same and phases are symmetrical; and
an output voltage of the output port is a sum of an output voltage of a corresponding port bridge arm and an output voltage of the common bridge arm.

5. The DC transformer for DC grid interconnection according to any one of claims 1 to 4, wherein the controller includes: a basic controller, a system operation controller, and a system protection controller, wherein,
the basic controller, connected to each submodule, is configured to calculate an average capacitor voltage of each bridge arm submodule and send the average capacitor voltage to the system operation controller and the system protection controller; receive a bridge arm voltage control command issued by the system operation controller, process and obtain an output status of each submodule, and issue the output status to each submodule; receive a protection locking command issued by the system protection controller and control a corresponding bridge arm submodule to complete a locking action;
the system operation controller is connected to the basic controller; and
the system protection controller is connected to the basic controller.

6. A control and protection method of a DC transformer for DC grid interconnection, based on the DC transformer for DC grid interconnection according to claim 5, the method comprising:
controlling a voltage or current of each port, an overall energy balance of the DC transformer for DC grid interconnection, and energy balance between bridge arms, by controlling an operating status of a port bridge arm; and
performing a real-time detection of a voltage of each port and an average capacitor voltage of the bridge arm submodule, and performing a corresponding protection mechanism in response to a real-time detection value is abnormal.

7. The control and protection method of the DC transformer for DC grid interconnection according to claim 6, wherein a process of controlling the voltage or current of each port, the overall energy balance of the DC transformer for DC grid interconnection, and the energy balance between bridge arms, by controlling the operating status of the port bridge arm, comprises:
dividing the port bridge arms into a controllable port bridge arm and a balanced port bridge arm, based on characteristics of the DC power grid connected to each port bridge arm;
giving a DC component control value of the common bridge arm;
detecting an AC voltage at the common point and subtracting the AC voltage at the common point from a corresponding reference value to obtain a first error value; and obtaining an AC component control value of the common bridge arm, by calculating the first error value through the system operation controller;
detecting a port voltage or current, and subtracting the port voltage or current from a corresponding reference value to obtain a second error value; and obtaining a DC component control value of the controllable port bridge arm, by calculating the second error value through the system operation controller;
detecting capacitor voltages of all bridge arm submodules, obtaining the overall energy value of the DC transformer through calculating, and subtracting the overall energy value from a corresponding reference value to obtain a third error value; and obtaining a DC component control value of the balanced port bridge arm, by calculating the third error value through the system operation controller;
detecting the capacitor voltages of all bridge arm submodules, obtaining the energy value of each port bridge arm through calculating, and subtracting the energy value of each port bridge arm from the overall energy value of the DC transformer to obtain a fourth error value; and obtaining an AC component control value of each port bridge arm, by calculating the fourth error value through the system operation controller; and
adding the DC component control value and the AC component control value of each bridge arm to obtain a voltage control value of each bridge arm, and sending the voltage control value of each bridge arm to the basic controller; and controlling, by the basic controller, a switching of the bridge arm submodules for output, based on the voltage control value of each bridge arm.

8. The control and protection method of the DC transformer for DC grid interconnection according to claim 6 or 7, wherein a process of performing a port overvoltage protection mechanism, comprises:
detecting a voltage at each port; and
locking a port bridge arm connected to a port, in response to the voltage of the port exceeds a first preset protection threshold.

9. The control and protection method of the DC transformer for DC grid interconnection according to any one of claims 6 to 8, wherein a process of performing an overvoltage protection mechanism of a port submodule, comprises:
detecting an average capacitor voltage of each bridge arm submodule; and
locking a bridge arm, in response to the average capacitor voltage of the bridge arm submodule exceeds a second preset protection threshold.

10. The control and protection method of the DC transformer for DC grid interconnection according to any one of claims 6 to 9, wherein a process of performing a polarity asymmetric protection mechanism, comprises:
dividing the port bridge arms into a controllable port bridge arm and a balanced port bridge arm, based on parameters of the DC power grid connected to each port bridge arm;
calculating a difference between a positive voltage and a negative voltage at each port, by detecting a voltage at each port; and
locking all bridge arms, in response to the difference between the positive voltage and the negative voltage corresponding to a balanced bridge arm exceeds a third preset protection threshold; and locking a controllable port bridge arm, in response to the difference between the positive voltage and the negative voltage corresponding to the controllable bridge arm exceeds a fourth protection threshold.
